# FASCICULE DE BREVET EUROPEEN

(11) **EP 0 765 465 B1**
(45) Date de publication et mention de la délivrance du brevet: **25.11.1998**
(21) Numéro de dépôt: 95922583.0
(22) Date de dépôt: 08.06.1995
(51) Int. Cl.: G01F 1/66, G01F 15/00

(54) **DISPOSITIF DE MESURE ULTRASONORE D'UNE QUANTITE VOLUMIQUE D'UN FLUIDE**
DURCHFLUSSMESSER NACH DEM ULTRASCHALLPRINZIP ZUR MESSUNG EINER FLÜSSIGKEITSVOLUMENMENGE
DEVICE FOR ULTRASONIC MEASUREMENT OF A FLUID VOLUME

(30) Priorité: 17.06.1994 FR 9407489
(43) Date de publication de la demande: 02.04.1997
(73) Titulaire: SCHLUMBERGER INDUSTRIES S.A., 92120 Montrouge (FR)
(72) Inventeur: HOCQUET, Philippe, F-92170 Vanves (FR); HUANG, Bao, Tuan, F-92160 Antony (FR)
(86) Numéro de dépôt international: FR9500752
(87) Numéro de publication internationale: WO9535481

(56) Documents cités:
- EP-A- 0 451 355
- EP-A- 0 555 704
- EP-A- 0 580 099
- WO-A-94/04890
- GB-A- 2 259 571

## Description

La présente invention concerne un dispositif de mesure ultrasonore d'une quantité volumique de fluide tel qu'un débit ou un volume de fluide.

On connait des dispositifs de mesure ultrasonore d'une quantité volumique de fluide tels que des compteurs ou des débitmètres utilisant les méthodes de mesure basées sur la vitesse de propagation d'une (ou de plusieurs) onde(s) ultrasonore(s) et sur la détermination du temps de propagation ou de la phase de cette (ou ces) onde(s) qui sont des grandeurs dépendant de la vitesse du fluide. De tels dispositifs sont généralement constitués d'un bloc de mesure formé, d'une part, d'un canal de mesure ayant une direction longitudinale et, d'autre part, d'au moins deux transducteurs ultrasonores disposés à deux extrémités opposées dudit bloc de mesure et respectivement en vis-à-vis d'une extrémité dudit canal de mesure.
Ces dispositifs comprennent également une entrée et une sortie de fluide qui communiquent chacune avec une des extrémités du canal de mesure.
L'entrée et la sortie de fluide sont perpendiculaires à la direction longitudinale du canal de mesure et définissent avec celle-ci un plan de symétrie longitudinal.
Un tel dispositif est par exemple décrit dans la demande de brevet européen n°0 580 099.
Compte tenu du principe de mesure ultrasonore, il est essentiel de prévoir des moyens de conditionnement de l'écoulement de fluide qui procurent à cet écoulement une même distribution de vitesses à l'entrée du canal de mesure quelles que soient les conditions de vitesse à l'entrée du dispositif de mesure pour un débit de fluide donné.
Le dispositif de mesure décrit dans la demande de brevet EP 0 580 099 fournit des moyens pour conditionner l'écoulement du fluide symétriquement par rapport au plan de symétrie avant que ledit écoulement ne pénètre dans le canal de mesure.

Les moyens précités sont formés par une chambre disposée au dessus du canal de mesure sur une grande partie de sa longueur obligeant ainsi l'écoulement à parcourir un certain trajet puis, à l'extrémité de cette chambre, une nervure centrale faisant saillie dans ladite chambre depuis la paroi supérieure du canal de mesure sert à fractionner l'écoulement de part et d'autre du canal de mesure.
Chaque fraction d'écoulement emprunte ensuite un des deux canaux latéraux accolés parallèlement au canal de mesure et parcourt ledit canal pour déboucher à son extrémité de sortie qui correspond à l'extrémité d'entrée dudit canal de mesure.
Le canal de mesure décrit dans cette demande est une fente allongée dans la direction longitudinale et de section transversale rectangulaire disposée verticalement.
Il est également prévu de disposer à l'extrémité de sortie de chacun des canaux latéraux plusieurs plaques parallèles entre elles et destinées à redresser l'écoulement de fluide.
Cependant, un tel dispositif de mesure n'est pas simple à fabriquer et présente en outre l'inconvénient de ne pas pouvoir s'adapter aux canaux de mesure axisymétriques et qui ont par exemple une section hydraulique de forme circulaire.
La présente invention a donc pour objet un dispositif de mesure ultrasonore d'une quantité volumique de fluide comprenant des moyens simples de conditionnement de l'écoulement du fluide, permettant d'homogénéiser parfaitement la distribution de vitesses dudit écoulement avant son entrée dans le canal de mesure quelles que soient les conditions de vitesse à l'entrée du dispositif de mesure et pouvant s'adapter aussi bien aux canaux de mesure bidimensionnels qu'aux canaux de mesure axisymétriques.
La présente invention a ainsi pour objet un dispositif comme revendiqué dans la revendication 1.

La Demanderesse s'est aperçue que le fait de conditionner de cette manière l'écoulement du fluide uniquement dans une partie du dispositif située au droit de l'extrémité du bloc de mesure correspondant à l'extrémité d'entrée du canal de mesure en amont de ladite extrémité d'entrée et non pas d'obliger ledit écoulement à parcourir un trajet long et compliqué le long du canal de mesure afin de mieux le tranquilliser permet justement de pouvoir s'adapter aussi bien aux canaux de mesure bidimensionnels qu'aux canaux de mesure axisymétriques et de ne pas créer de décollement de couche limite aux débits élevés ce qui perturberait l'écoulement.

Avantageusement, pour détruire la structure tourbillonnaire de l'écoulement du fluide, on réduit fortement sa vitesse en le faisant déboucher dans la chambre d'entrée de grandes dimensions et l'on fractionne ensuite ledit écoulement afin de faire définitivement disparaitre cette structure tourbillonnaire.
L'augmentation de section entre l'entrée de fluide et la chambre d'entrée est au moins égale à un rapport deux, de préférence au moins égale à un rapport quatre et par exemple égale à un rapport cinq permettant ainsi de casser la structure tourbillonnaire de l'écoulement du fluide.
Chaque fraction d'écoulement ainsi conditionnée doit alors être orientée judicieusement vers l'extrémité d'entrée du canal de mesure avec un angle moyen de convergence suffisamment ouvert par rapport à la direction de l'écoulement lors de son introduction dans le canal de mesure, c'est à dire supérieur ou égal à 30° pour que les fractions d'écoulement ne créent pas de mouvement perturbateur à l'entrée dudit canal de mesure.
Un angle par exemple supérieur ou égal à 45° est satisfaisant. Par contre, un angle trop proche de 90° risquerait de créer un décollement de couche limite pour les débits élevés et donc d'induire des perturbations dans l'écoulement.
Selon une autre caractéristique de l'invention, la chambre d'entrée possède deux parois opposées, l'une pourvue de l'entrée de fluide et l'autre située en face de ladite entrée de fluide et étant perpendiculaire à la direction de l'écoulement du fluide lors de son entrée dans ladite chambre d'entrée et en ce que les moyens de fractionnement sont formés par deux ouvertures ménagées dans la paroi opposée à l'entrée de fluide, lesdites ouvertures étant espacées transversalement et communiquant avec l'extrémité du bloc de mesure correspondant à l'extrémité d'entrée du canal de mesure.

L'extrémité correspondante du bloc de mesure est formée par une chambre dite amont contenant l'un des transducteurs ultrasonores et qui est séparée de la chambre d'entrée par la paroi de ladite chambre d'entrée qui est opposée à l'entrée de fluide.

Selon l'invention, les moyens d'orientation de chaque fraction d'écoulement vers l'extrémité d'entrée du canal de mesure avec un angle moyen de convergence suffisamment ouvert sont obtenus en choisissant convenablement le positionnement des ouvertures par rapport à ladite extrémité.
Ainsi, chaque ouverture est située à une distance du plan transversal contenant l'extrémité d'entrée du canal de mesure supérieure ou égale au diamètre hydraulique dudit canal de mesure.
En effet, si cette distance est inférieure au diamètre hydraulique, l'angle moyen de convergence de chaque fraction d'écoulement du gaz est trop fermé et donc génère des structures tourbillonnaires à l'extrémité d'entrée 12a du canal de mesure.
En outre, les deux ouvertures sont espacées l'une de l'autre d'une distance minimale égale au demi diamètre hydraulique du canal de mesure pour que l'écoulement de gaz au droit du transducteur ultrasonore 14 soit le plus stable possible ou ait des variations de vitesse les plus faibles possibles.

Pour que les fractions d'écoulement de fluide ne rencontrent pas le transducteur ultrasonore de la chambre amont, il est prévu que celui-ci soit situé à une distance du plan transversal contenant l'extrémité d'entrée du canal de mesure qui est au moins égale à la distance entre une ouverture et ledit plan transversal.
Selon encore une autre caractéristique de l'invention, la somme des sections de passage des ouvertures est au moins égale à la section hydraulique du canal de mesure et est de préférence au moins égale à quatre fois cette section hydraulique.
Avantageusement, la chambre d'entrée dans laquelle débouche l'entrée de fluide possède des dimensions suffisantes pour que l'on puisse s'adapter aux différents spécifications techniques concernant l'entraxe à respecter entre l'entrée et la sortie de fluide en aménageant l'entrée de fluide au droit des ouvertures ou dans un plan transversal différent.
Il convient de noter que le dispositif de mesure selon l'invention peut présenter une symétrie partielle ou totale par rapport à un plan transversal P1, donc perpendiculaire au plan de symétrie longitudinal, et passant par le milieu du bloc de mesure.
Dans un tel cas où le dispositif de mesure possède une chambre de sortie symétrique de la chambre d'entrée, il est alors également possible de positionner différemment la sortie de fluide pour faire varier l'entraxe précité et, par exemple, la placer en parfaite symétrie avec l'entrée de fluide par rapport au plan de symétrie transversal médian.

Lorsque le fluide utilisé est un gaz, il peut être intéressant de le débarrasser de ses diverses particules polluantes (poussières ...)avant son entrée dans le canal de mesure.
Pour ce faire, il est prévu que les moyens de conditionnement comprennent en outre une chambre supplémentaire disposée de manière opposée à la chambre d'entrée par rapport à l'extrémité correspondante du bloc de mesure, ladite chambre supplémentaire communiquant avec ladite extrémité par l'intermédiaire de fenêtres situées respectivement au droit des ouvertures.

Cette configuration est utile lorsque le dispositif de mesure selon l'invention est disposé verticalement, c'est-à-dire lorsque le plan de symétrie longitudinal est vertical, et quand la chambre d'entrée est placée au dessus du bloc de mesure, la chambre supplémentaire étant alors située sous le bloc de mesure à la verticale de ladite chambre d'entrée.
La chambre supplémentaire permet de recueillir les particules polluantes dont est chargé le gaz et qui sont éliminées lorsque chaque fraction d'écoulement de gaz passe par les ouvertures et est ramené vers le plan de symétrie longitudinal.

D'autres caractéristiques et avantages apparaîtront au cours de la description qui va suivre donnée à titre d'exemple non limitatif et faite en référence aux dessins annexés sur lesquels
- la figure 1 est une vue schématique en coupe longitudinale d'un dispositif de mesure selon un mode de réalisation de l'invention,
- la figure 2 est une vue schématique en coupe A-A du dispositif de mesure représenté à la figure 1,
- la figure 3 est une vue schématique en coupe B-B du dispositif de mesure représenté à la figure 1,
- la figure 4 est un croquis en vue de dessus d'une partie du dispositif de mesure représenté aux figures 1 à 3 et permettant de montrer l'angle moyen de convergence conféré aux fractions d'écoulement du fluide par les ouvertures (non visibles mais repérées par des pointillés) et leur positionnement,
- la figure 5 est une vue schématique partielle en coupe longitudinale du dispositif de mesure représenté à la figure 1 selon une variante de l'invention,
- la figure 6 est une vue schématique en coupe longitudinale d'un dispositif de mesure selon un deuxième mode de réalisation de l'invention,
- la figure 7 est un croquis en vue de dessus d'une partie du dispositif de mesure représenté à la figure 6 et permettant de montrer l'angle moyen de convergence conféré aux fractions d'écoulement du fluide par les ouvertures (non visibles mais repérées par des pointillés) et leur positionnement.

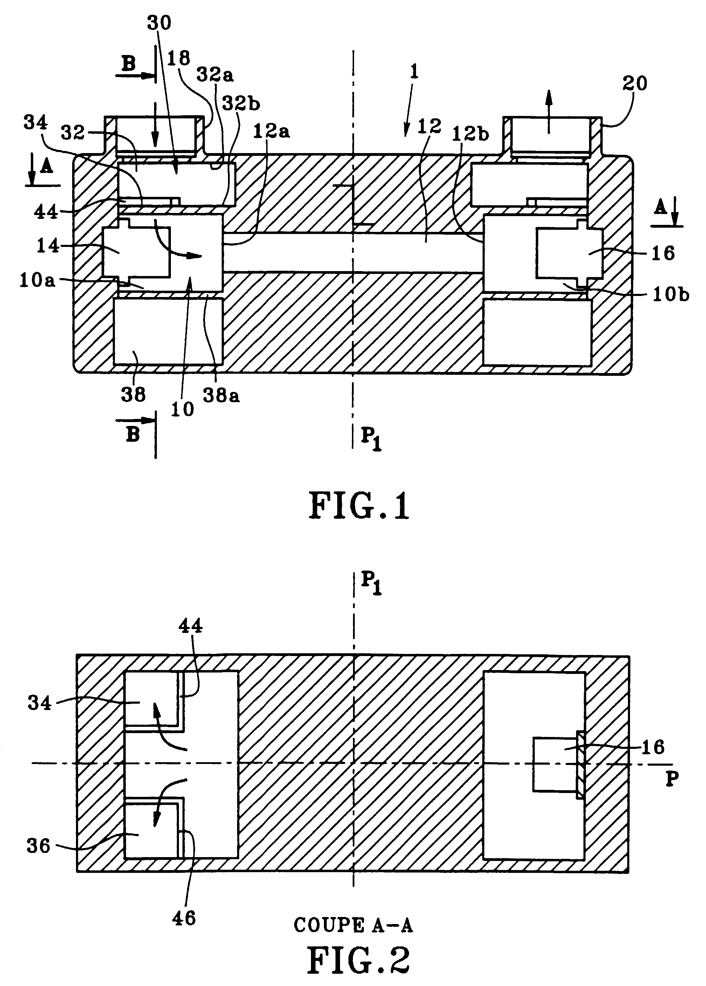

Comme représenté aux figures 1 à 7 et désigné dans son ensemble par la référence 1, le dispositif de mesure d'une quantité volumique d'un fluide selon l'invention s'applique par exemple à la mesure d'une quantité volumique de gaz telle que le volume.
Le dispositif de mesure selon l'invention présente une symétrie par rapport à un plan de symétrie longitudinal P qui correspond au plan des figures 1, 5 et 6.
Un tel dispositif représenté aux figures 1 à 4 selon un premier mode de réalisation de l'invention comprend un bloc de mesure 10.
Dans l'exposé qui suit, ce dispositif présente en outre une symétrie par rapport à un plan transversal P1 passant par le milieu du bloc de mesure (fig. 1).

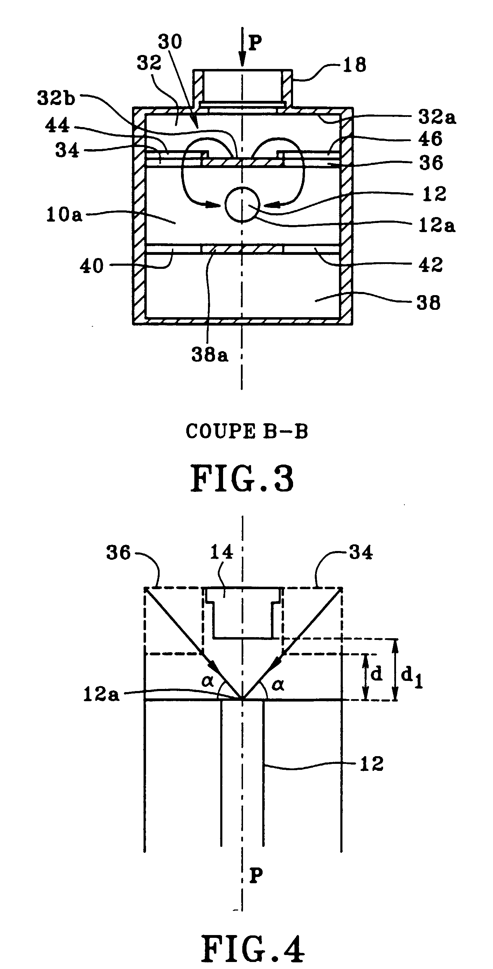

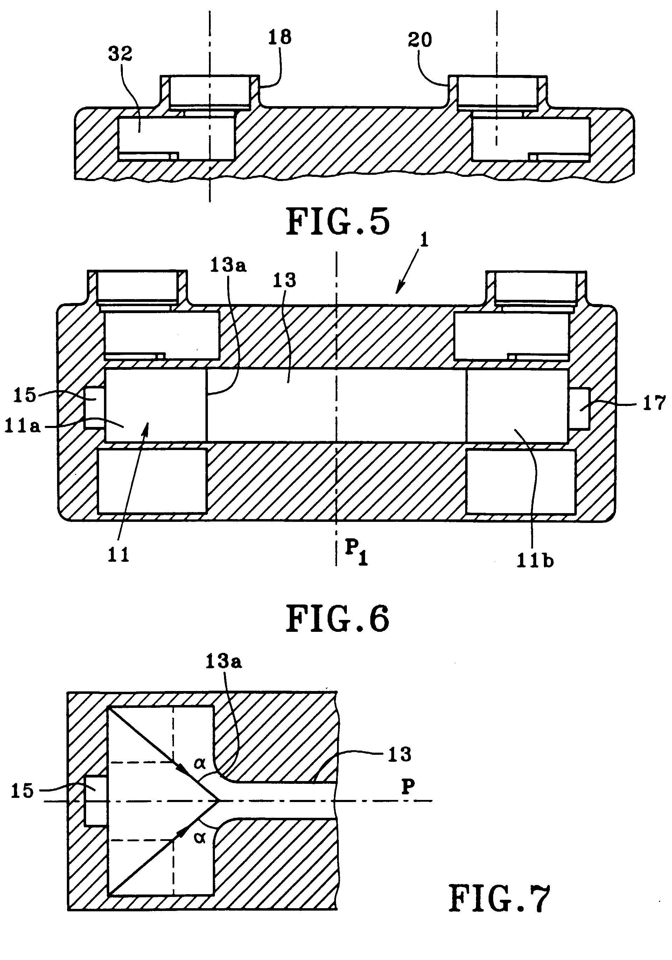

Ce bloc de mesure est formé, d'une part, d'un canal de mesure 12 ayant une direction longitudinale contenue dans le plan P et, d'autre part, de deux transducteurs ultrasonores 14 et 16.
Le canal de mesure 12 est un canal axisymétrique et possède par exemple une section transversale, c'est-à-dire une section contenue dans un plan parallèle à P1, de forme circulaire (fig. 3). Ce canal possède deux extrémités 12a et 12b situées respectivement chacune à proximité d'une des extrémités 10a et 10b du bloc de mesure. Chacun des transducteurs ultrasonores est disposé à l'une des extrémités 10a et 10b du bloc de mesure 10 et plus précisément en vis-à-vis d'une des extrémités 12a et 12b du canal 12.
En fait, chaque extrémité 10a, 10b du bloc de mesure est formée par une chambre dite amont pour l'extrémité 10a et dite aval pour l'extrémité 10b.
Ainsi, les deux chambres 10a et 10b sont reliées par le canal de mesure 12.
Une entrée 18 et une sortie 20 de gaz sont prévues en partie haute du dispositif 1 et communiquent respectivement avec une des chambres amont 10a et aval 10b du bloc de mesure.
L'entrée et la sortie de gaz sont disposées perpendiculairement à la direction longitudinale du canal de mesure 12 et définissent avec cette direction le plan de symétrie longitudinal P.
Le dispositif de mesure 1 selon l'invention comprend des moyens 30 pour conditionner l'écoulement de gaz préalablement à l'introduction de cet écoulement dans le canal de mesure par l'extrémité 12a dite d'entrée dudit canal de mesure afin de conférer audit écoulement une même distribution de vitesses à l'extrémité 12a, quelle que soit la distribution de vitesses à l'entrée 18.
Ce conditionnement est par exemple très utile si le raccordement à l'entrée 18 forme un coude.
Il est essentiel que les moyens pour conditionner l'écoulement de gaz soient uniquement disposés au droit de la chambre amont 10a du bloc de mesure 10 afin que ces moyens puissent s'adapter également à un canal de mesure dont la section transversale a une forme de fente par exemple rectangulaire (fig. 6 et 7).

De tels moyens comprennent une chambre 32 appelée chambre d'entrée située entre l'entrée 18 et la chambre amont 10a du bloc de mesure. Cette chambre d'entrée 32 possède deux parois opposées 32a et 32b parallèles entre elles.
L'entrée de gaz 18 est aménagée perpendiculairement dans la paroi supérieure 32a de façon à ce que la direction de l'écoulement du gaz, lors de son introduction dans la chambre d'entrée 32, soit perpendiculaire à la paroi inférieure 32b.
Cette chambre 32 possède de grandes dimensions vis-à-vis de celles de l'entrée 18 et la section de passage de cette chambre dans le sens d'écoulement du gaz est au moins égale à deux fois la section de passage de ladite entrée et est par exemple égale à cinq fois cette section de passage.
La paroi inférieure 32b sépare la chambre d'entrée 32 de la chambre amont 10a et constitue la paroi supérieure de ladite chambre d'entrée. Deux ouvertures 34, 36 de sections de passage parallèles à la paroi inférieure 32b sont ménagées dans celle-ci et permettent ainsi le passage du gaz entre les deux chambres.
On pourrait également prévoir une configuration avec un autre nombre d'ouvertures.
Comme représenté sur les figures 2 et 3, ces ouvertures 34 et 36 sont espacées transversalement de part et d'autre du plan de symétrie longitudinal P et sont par exemple situées aux deux extrémités transversales opposées de la chambre d'entrée 32.
Il est possible de les rapprocher du plan de symétrie longitudinal P sans toutefois dépasser une distance transversale minimale qui est égale au diamètre hydraulique du canal de mesure.
En effet, en dessous de cette distance minimale, le mélange des fractions d'écoulement provenant des deux ouvertures 34 et 36 crée des fluctuations de vitesse au droit du transducteur qui détériorent la qualité de la mesure ultrasonore.
Il est par exemple prévu de disposer les ouvertures 34, 36 au droit de l'entrée du gaz 18 tel que représenté sur la figure 1.

Mais, en fonction des exigences particulières formulées dans certains pays, il est possible d'adapter facilement l'entraxe entre les entrée 18 et sortie 20 de gaz en déplaçant lesdites entrée et sortie.
La figure 5 représente un dispositif de mesure pour lequel l'entraxe a été réduit et pour cette configuration l'entrée de gaz et les ouvertures 34 et 36 sont situées dans des plans transversaux différents.
Ceci constitue un avantage par rapport au dispositif de mesure décrit dans la demande de brevet EP 0 580 099 où l'on ne dispose pas d'une telle latitude pour positionner les entrée et sortie de gaz compte tenu de l'emplacement des moyens de conditionnement de l'écoulement.
Pour le dispositif de mesure selon l'invention, il faut que la somme des sections de passage des ouvertures 34, 36 soit au moins égale à la section hydraulique du canal de mesure 10 afin que l'écoulement entre les ouvertures 34 et 36 et le canal de mesure soit soumis à une accélération constante.
Cette somme est de préférence supérieure à quatre fois la section hydraulique et par exemple égale à 4,7 fois cette section.

Comme représenté sur les figures 1 et 3, les moyens de conditionnement 30 comprennent en outre une chambre supplémentaire 38 située sous le bloc de mesure 10 et au droit de la chambre amont 10a dudit bloc.
Il est très possible de conférer à cette chambre 38 une forme identique à celle de la chambre d'entrée 32.
Dans un tel cas de figure, le dispositif de mesure est également symétrique par rapport à un plan médian horizontal perpendiculaire au plan de symétrie longitudinal P et il est donc plus facile à fabriquer.
En outre, au cours de la fabrication, on peut aménager les entrée et sortie de gaz dans n'importe quelles chambres sans avoir besoin de repérer la partie haute ou la partie basse du dispositif.
Deux fenêtres 40 et 42 (figure 3) sont aménagées dans la paroi supérieure 38a de la chambre 38 qui est confondue avec la paroi inférieure de la chambre amont 10a.
Ces fenêtres 40 et 42 sont respectivement situées au droit des ouvertures 34 et 36.

Dans certains cas, il peut être nécessaire d'éviter une circulation de gaz entre les fenêtres 40 et 42 par l'intermédiaire de la chambre supplémentaire 38, créant ainsi une dissymétrie de l'écoulement par rapport au plan P. Par conséquent, on peut prévoir une cloison d'étanchéité située dans le plan P et partageant la chambre 38 en deux demi-chambres.
Toute la partie du dispositif de mesure selon l'invention qui est située de l'autre côté du plan de symétrie transversal P1 est identique et ne sera pas décrite.
Toutefois, on peut aussi prévoir d'aménager la chambre de sortie et la sortie de gaz 20 en partie basse du dispositif de mesure sans affecter la mesure du volume de gaz.
On va maintenant décrire en référence aux figures 1 à 4 les différentes fonctions réalisées par les moyens de conditionnement précités en suivant le trajet de l'écoulement de gaz depuis son entrée dans le dispositif de mesure.
Ainsi, l'écoulement du gaz pénètre verticalement par l'entrée de gaz 18 dans le sens indiqué par la flèche de la figure 1 et débouche dans la chambre d'entrée 32 où il est soumis à une variation brutale de section de passage et percute la paroi inférieure 32b de cette chambre.
Ceci a pour effet de détruire la structure tourbillonnaire de l'écoulement de gaz en diminuant considérablement sa vitesse.
Il faut noter que ces moyens de conditionnement ne réduisent pas le caractère turbulent de l'écoulement de gaz ce qui est avantageux pour le profil de vitesse dudit écoulement avant son entrée dans le canal de mesure.
Lorsque l'écoulement de gaz s'est heurté à la paroi inférieure 32b de la chambre d'entrée 32 et s'est désorganisé, il est fractionné (figs. 2 et 3) en s'écartant du plan de symétrie longitudinal P au droit des deux ouvertures 34 et 36 ce qui achève de détruire sa structure tourbillonnaire et il pénètre ensuite verticalement dans la chambre amont 10a située en dessous par ces ouvertures.
Deux rebords 44 et 46 sont respectivement disposés en bordure des ouvertures 34 et 36 et permettent ainsi de débarrasser chaque fraction d'écoulement de gaz d'une partie des particules polluantes (poussières ...) dont le gaz est chargé.
Chaque ouverture 34, 36 est positionnée d'une telle manière que la fraction de l'écoulement de gaz qui l'a traversée soit orientée vers l'extrémité d'entrée 12a du canal de mesure 12 selon un angle moyen de convergence a (figure 4) suffisamment ouvert pour permettre à chaque fraction de pénétrer dans ledit canal de mesure sans que la distribution de vitesses soit perturbée.
Cet angle a qui représente l'orientation générale de l'écoulement doit être supérieur ou égal à 30°, de préférence supérieur à 45° et pas trop proche de 90° et, par exemple, est égal à 50°.
Sur cette figure 4, les pointillés représentent de manière fictive uniquement l'emplacement des ouvertures dans la paroi 32b et ne sont pas situés sous la chambre amont 10a comme la figure pourrait le laisser supposer.
Pour respecter les conditions d'une parfaite convergence, il faut également que chaque ouverture soit située à une distance d (figure 4) du plan transversal parallèle à P1 contenant l'extrémité 12a du canal de mesure 12 qui est supérieure ou égale au diamètre hydraulique dudit canal de mesure.
Par exemple, cette distance est égale à 1,2 fois le diamètre hydraulique du canal de mesure.
Chaque fraction d'écoulement convergeant vers l'extrémité 12a est alors accéléré à son entrée dans le canal de mesure et présente une bonne homogénéité dans sa distribution de vitesses.
Pour ne pas que les fractions d'écoulement pénètrant dans la chambre amont 10a soient gênées par le transducteur ultrasonore 14, il est prévu que celui-ci soit situé à une distance dl du plan transversal contenant l'extrémité d'entrée 12a du canal de mesure qui est au moins égale à la distance d.
Il est tout à fait possible de disposer le transducteur ultrasonore 14 en retrait par rapport aux ouvertures 34 et 36 et ainsi de les rapprocher vers le plan de symétrie longitudinal P sans perturber la distribution de vitesse des fractions d'écoulement.

Comme représenté sur les figures 2 et 3, chaque fraction d'écoulement de gaz effectue un mouvement de rotation bien particulier selon une direction verticale lui permettant ainsi de se débarrasser des diverses particules polluantes lors de son passage dans la chambre amont 10a au droit des fenêtres 40 et 42.
Les particules tombent sous l'action de la gravité dans la chambre supplémentaire 32 dite de dépoussiérage prévue à cet effet.
Ces moyens de conditionnement 30 sont très efficaces et particulièrement simples à fabriquer, ne nécessitant pas de faire parcourir à l'écoulement de gaz un trajet long et compliqué pour le tranquilliser.
Il convient de noter que lorsque l'écoulement doit parcourir un trajet long et compliqué et qu'il converge vers l'extrémité d'entrée du canal de mesure suivant un angle fermé, par exemple de 180°, comme représenté dans le dispositif du document GB 2 259 571 de l'art antérieur, il existe un risque élevé de créer un décollement de la couche limite de l'écoulement aux hauts débits et donc de perturber ledit écoulement.
En outre, ceci tend à créer des pertes de charge supplémentaires ce qui n'est pas le cas avec la présente invention.
Les figures 6 et 7 représentent un deuxième mode de réalisation de l'invention qui diffère peu du premier mais qui sert à illustrer le fait que les moyens de conditionnement précités s'appliquent aussi bien aux canaux de mesure axisymétriques que bidimensionnels.
Par conséquent, tout ce qui a été expliqué ci-dessus reste valable et de nouvelles références ne seront attribuées aux éléments des figures 6 et 7 que lorsque ces éléments se distinguent de ceux des figures 1 à 5.
Ce deuxième mode de réalisation de l'invention diffère du premier par le fait que, d'une part, les transducteurs ultrasonores 15 et 17 sont logés dans les parois d'extrémités opposées des chambres amont 11a et aval 12b du bloc de mesure 11 dégageant ainsi un espace libre devant chaque extrémité 13a, 13b du canal de mesure 13 dans lesdites chambres amont et aval et, d'autre part, le canal de mesure est bidimensionnel.

Le canal de mesure 13 a une section transversale en forme de rectangle dont la longueur ou hauteur est dirigée verticalement (parallèle au plan de symétrie longitudinal P).
La figure 7 montre la largeur du canal 13 ou dimension transversale et illustre le fait que l'extrémité d'entrée 13a possède une forme de convergent permettant d'accélérer davantage chaque fraction d'écoulement de gaz judicieusement orientée suivant l'angle a (comme expliqué précédemment) et de faciliter son introduction dans ledit canal. Il convient de noter que les transducteurs ultrasonores 15 et 17 peuvent définir entre eux un trajet ultrasonore qui n'est pas parallèle à la direction longitudinale du canal de mesure 13.
Ainsi, on peut par exemple disposer les transducteurs dans la paroi supérieure à l'intérieur du canal de mesure de telle manière qu'ils définissent entre eux un trajet ultrasonore en forme de V.

## Revendications

1. Dispositif (1) de mesure d'une quantité volumique d'un fluide comprenant
- un bloc de mesure (10) formé, d'une part, d'un canal de mesure (12) ayant une direction longitudinale et, d'autre part, d'au moins deux transducteurs ultrasonores (14, 16) définissant entre eux un trajet ultrasonore, ledit bloc de mesure ayant deux extrémités opposées (10a, 10b) respectivement en vis-à-vis d'une extrémité (12a, 12b) dudit canal de mesure,
- une entrée (18) et une sortie (20) de fluide communiquant chacune respectivement avec une desdites extrémités (12a, 12b) du canal de mesure (12), étant perpendiculaires à sa direction longitudinale et définissant avec celle-ci un plan de symétrie longitudinal (P),
- des moyens (30) pour conditionner l'écoulement du fluide symétriquement par rapport au plan P, préalablement à son introduction dans le canal de mesure par l'extrémité dite d'entrée (12a) qui communique avec ladite entrée de fluide et qui comprennent
- une chambre dite d'entrée (32) dans laquelle débouche l'entrée de fluide (18) et offrant une grande augmentation de section audit écoulement du fluide,
- des moyens (34, 36) pour fractionner l'écoulement du fluide en s'écartant du plan de symétrie P,
- des moyens pour orienter chaque fraction d'écoulement du fluide vers l'extrémité d'entrée (12a) du canal de mesure, caractérisé en ce que lesdits moyens (30) pour conditionner l'écoulement du fluide sont disposés au droit de l'extrémité (10a) du bloc de mesure correspondant à l'extrémité d'entrée (12a) du canal de mesure et lesdits moyens pour orienter chaque fraction d'écoulement du fluide vers l'extrémité d'entrée (12a) du canal de mesure orientent lesdites fractions selon un angle moyen de convergence suffisamment ouvert par rapport à la direction de l'écoulement lors de son introduction dans le canal de mesure (12).

2. Dispositif selon la revendication 1, caractérisé en ce que la chambre d'entrée (32) possède deux parois opposées (32a, 32b), l'une (32a) pourvue de l'entrée de fluide (18) et l'autre (32b) située en face de ladite entrée de fluide et étant perpendiculaire à la direction de l'écoulement du fluide lors de son entrée dans ladite chambre d'entrée (32) et en ce que les moyens de fractionnement sont formés par deux ouvertures (34, 36) ménagées dans la paroi opposée à l'entrée de fluide, lesdites ouvertures étant espacées transversalement et communiquant avec l'extrémité (10a) du bloc de mesure (10) correspondant à l'extrémité d'entrée (12a) du canal de mesure.

3. Dispositif selon la revendication 2, caractérisé en ce que ladite extrémité correspondante (10a) du bloc de mesure est formée par une chambre dite amont (10a) contenant l'un (14) des transducteurs ultrasonores et qui est séparée de la chambre d'entrée (32) par la paroi (32b) de ladite chambre d'entrée qui est opposée à l'entrée de fluide (18).

4. Dispositif selon l'une des revendications 1 à 3, caractérisé en ce que l'angle moyen de convergence est supérieur ou égal à 45°.

5. Dispositif selon l'une des revendications 2 à 4, caractérisé en ce que chaque ouverture (34, 36) est située à une distance du plan transversal contenant l'extrémité d'entrée (12a) du canal de mesure (12) supérieure ou égale au diamètre hydraulique dudit canal de mesure.

6. Dispositif selon l'une des revendications 2 à 5, caractérisé en ce que les deux ouvertures (34, 36) sont espacées l'une de l'autre d'une distance minimale égale au demi diamètre hydraulique du canal de mesure (12).

7. Dispositif selon l'une des revendications 3 à 6, caractérisé en ce que le transducteur ultrasonore (14) de la chambre amont (10a) est situé à une distance du plan transversal contenant l'extrémité d'entrée du canal de mesure (12) qui est au moins égale à la distance entre une ouverture et ledit plan transversal.

8. Dispositif selon l'une des revendications 2 à 7, caractérisé en ce que la somme des sections de passage des ouvertures (34, 36) est au moins égale à la section hydraulique du canal de mesure.

9. Dispositif selon la revendication 8, caractérisé en ce que la somme des sections de passage des ouvertures (34, 36) est de préférence au moins égale à quatre fois la section hydraulique du canal de mesure.

10. Dispositif selon l'une des revendications 1 à 9, caractérisé en ce que l'augmentation de section entre l'entrée de fluide (18) et la chambre d'entrée (32) est au moins égale à un rapport deux.

11. Dispositif selon la revendication 10, caractérisé en ce que l'augmentation de section est au moins égale à un rapport quatre.

12. Dispositif selon l'une des revendications 2 à 11, caractérisé en ce que les ouvertures (34, 36) sont situées au droit de l'entrée de fluide (18).

13. Dispositif selon l'une des revendications 2 à 11, caractérisé en ce que les ouvertures (34, 36) sont situées dans un plan transversal différent de celui de l'entrée de fluide (18).

14. Dispositif selon l'une des revendications 2 à 13, caractérisé en ce que les moyens de conditionnement (30) comprennent en outre une chambre supplémentaire (38) disposée de manière opposée à la chambre d'entrée (32) par rapport à l'extrémité correspondante (10a) du bloc de mesure, ladite chambre supplémentaire communiquant avec ladite extrémité par l'intermédiaire de fenêtres (40, 42) situées respectivement au droit des ouvertures (34, 36).

15. Dispositif selon l'une des revendications 1 à 14, caractérisé en ce que ledit dispositif (1) présente une symétrie par rapport à un plan transversal passant par le milieu du bloc de mesure (10).

16. Dispositif selon l'une des revendications 1 à 15, caractérisé en ce que le canal de mesure (12) a une section transversale de forme circulaire.

17. Dispositif selon l'une des revendications 1 à 15, caractérisé en ce que le canal de mesure (12) a une section transversale en forme de rectangle dont la longueur est parallèle au plan de symétrie longitudinal (P).

18. Dispositif selon l'une des revendications 1 à 17, caractérisé en ce que l'extrémité d'entrée (12a) du canal de mesure (12) a une forme de convergent.

## Patentansprüche

1. Vorrichtung (1) zur Messung einer volumenbezogenen Menge eines Fluids, mit
- einem Meßblock, der zum einen aus einem eine Längsrichtung aufweisenden Meßkanal (12) und zum anderen aus wenigstens zwei Ultraschallwandlern (14, 16) aufgebaut ist, die eine zwischen ihnen liegende Ultraschallstrecke definieren, wobei der Meßblock zwei entgegengesetzte Enden (10a, 10b) aufweist, von denen jedes jeweils einem anderen Ende (12a, 12b) des Meßkanals gegenüberliegt,
- einem Fluideinlaß (18) und einem Fluidauslaß (20), wobei jeder der beiden mit jeweils einem anderen Ende (12a, 12b) des Meßkanals (12) in Verbindung steht und beide senkrecht zur Längsrichtung des Meßkanals stehen und mit dieser zusammen eine Längssymmetrieebene (P) definieren,
- Mitteln (30), die die Strömung des Fluids symmetrisch zur Ebene (P) vor dem Einströmen des Fluids in den Meßkanal durch das mit dem Fluideinlaß in Verbindung stehende Einlaßende (12a) konditionieren und
- eine Einlaßkammer (32), in die der Fluideinlaß (18) einmündet und die der Strömung des Fluids eine starke Querschnittserweiterung bietet,
- Mittel (34, 36), die die Strömung des Fluids zerteilen, indem sie diese von der Symmetrieebene (P )weglenken, und
- Mittel umfassen, die jeden Teil der Strömung des Fluids zum Einlaßende (12a) des Meßkanals orientieren, dadurch gekennzeichnet, daß die Mittel (30), die die Strömung des Fluids konditionieren, gegenüber dem Ende (10a) des Meßblocks angeordnet sind, das dem Einlaßende (12a) des Meßkanals zugeordnet ist, und die Mittel, die jeden Teil der Strömung des Fluids zum Einlaßende (12a) des Meßkanals orientieren, die Teile beim Einleiten der Strömung in den Meßkanal (12) in einem hinreichend weit bezüglich der Strömungsrichtung geöffneten mittleren Konvergenzwinkel orientieren.

2. Vorrichtung nach Anspruch 1, dadurch gekennzeichnet, daß die Einlaßkammer (32) zwei einander gegenüberliegende Wände (32a, 32b) besitzt, wobei die eine mit dem Fluideinlaß (18) versehen ist und die andere (32b) dem Fluideinlaß gegenüberliegt und senkrecht zu der Richtung steht, in der das Fluid bei seinem Eintritt in die Einlaßkammer (32) strömt, und dadurch, daß die Zerteilungsmittel durch zwei Öffnungen (34, 36) gebildet sind, die in der dem Fluideinlaß gegenüberliegenden Wand gebildet sind, wobei sie in Querrichtung räumlich voneinander getrennt sind und mit dem Ende (10a) des Meßblocks (10) in Verbindung stehen, das zu dem Einlaßende (12a) des Meßkanals gehört.

3. Vorrichtung nach Anspruch 2, dadurch gekennzeichnet, daß das entsprechende Ende (10a) des Meßblocks durch eine stromaufwärts gelegene Kammer (10a) gebildet wird, die einen (14) der Ultraschallwandler enthält und von der Einlaßkammer (32) durch die dem Fluideinlaß (18) gegenüberliegende Wand (32b) der Einlaßkammer getrennt ist.

4. Vorrichtung nach einem der Ansprüche 1 bis 3, dadurch gekennzeichnet, daß der mittlere Konvergenzwinkel größer oder gleich 45° ist.

5. Vorrichtung nach einem der Ansprüche 2 bis 4, dadurch gekennzeichnet, daß jede Öffnung (34, 36) in einem Abstand zur das Einlaßende (12a) des Meßkanals enthaltenden Querebene angeordnet ist, der größer als der hydraulische Durchmesser des Meßkanals ist oder diesem entspricht.

6. Vorrichtung nach einem der Ansprüche 2 bis 5, dadurch gekennzeichnet, daß die beiden Öffnungen (34, 36) um wenigstens die Hälfte des hydraulischen Durchmessers des Meßkanals (12) voneinander beabstandet sind.

7. Vorrichtung nach einem der Ansprüche 3 bis 6, dadurch gekennzeichnet, daß der Ultraschallwandler (14) der stromaufwärts gelegenen Kammer (10a) in einem Abstand zur das Einlaßende des Meßkanals (12) enthaltenden Querebene angeordnet ist, der wenigstens dem Abstand zwischen einer Öffnung und der Querebene entspricht.

8. Vorrichtung nach einem der Ansprüche 2 bis 7, dadurch gekennzeichnet, daß die Summe der Durchflußquerschnitte der Öffnungen (34, 36) wenigstens dem hydraulischen Querschnitt des Meßkanals entspricht.

9. Vorrichtung nach Anspruch 8, dadurch gekennzeichnet, daß die Summe der Durchflußquerschnitte der Öffnungen (34, 36) vozugsweise wenigstens dem Vierfachen des hydraulischen Querschnitts des Meßkanals entspricht.

10. Vorrichtung nach einem der Ansprüche 1 bis 9, dadurch gekennzeichnet, daß die Querschnittserweiterung zwischen dem Fluideinlaß (18) und der Einlaßkammer (32) wenigstens gleich einem Faktor ist.

11. Vorrichtung nach Anspruch 10, dadurch gekennzeichnet, daß die Querschnittserweiterung wenigstens gleich einem Faktor 4 ist.

12. Vorrichtung nach einem der Ansprüche 2 bis 11, dadurch gekennzeichnet, daß die Öffnungen (34, 36) dem Fluideinlaß (18) gegenüberliegen.

13. Vorrichtung nach einem der Ansprüche 2 bis 11, dadurch gekennzeichnet, daß die Öffnungen (34, 36) in einer Querebene liegen, die sich von derjenigen des Fluideinlasses (18) unterscheidet.

14. Vorrichtung nach einem der Ansprüche 2 bis 13, dadurch gekennzeichnet, daß die Konditionierungsmittel (30) darüber hinaus eine zusätzliche Kammer (38) umfassen, die bezüglich des entsprechenden Endes (10a) des Meßblocks von der Einlaßkammer (32) abgewandt ist, wobei die zusätzliche Kammer über Fenster (40, 42), die jeweils den Öffnungen (34, 36) gegenüberliegen, mit dem Ende in Verbindung steht.

15. Vorrichtung nach einem der Ansprüche 1 bis 14, dadurch gekennzeichnet, daß sie symmetrisch zu einer Querebene ist, die durch die Mitte des Meßblocks (10) läuft.

16. Vorrichtung nach einem der Ansprüche 1 bis 15, dadurch gekennzeichnet, daß der Meßkanal (12) einen kreisförmigen Querschnitt besitzt.

17. Vorrichtung nach einem der Ansprüche 1 bis 15, dadurch gekennzeichnet, daß der Meßkanal einen Querschnitt in der Form eines Rechtecks aufweist, dessen Länge parallel zur Längssymmetrieebene (P) verläuft.

18. Vorrichtung nach einem der Ansprüche 1 bis 17, dadurch gekennzeichnet, daß das Einlaßende (12a) des Meßkanals (12) eine konvergierende Form besitzt.

## Claims

1. A device (1) for measuring a volume-related quantity of a fluid, comprising:
- a measurement block (10) formed firstly by a measurement channel (12) having a longitudinal direction, and secondly by at least two ultrasound transducers (14, 16) defining an ultrasound path between them, said measurement block having two opposite ends (10a, 10b) facing respective ends (12a, 12b) of said measurement channel,
- a fluid inlet (18) and a fluid outlet (20) each communicating with a respective one of said ends (12a, 12b) of the measurement channel (12), the inlet and outlet extending perpendicularly to the longitudinal direction of the measurement channel and co-operating with the measurement channel to define a longitudinal plane of symmetry (P),
- means (30) for conditioning the fluid flow symmetrically about the plane (P) prior to the flow penetrating into the inlet end (12a) of the measurement channel which is in communication with said fluid inlet, said means (30) comprising :
- an inlet chamber (32) into which the fluid inlet (18) opens out, said chamber providing a large increase in section to said fluid flow,
- fractioning means (34, 36) for fractioning the fluid flow going away from the plane of symmetry (P),
- means for directing each fraction of the fluid flow towards the inlet end (12a) of the measurement channel, characterized in that said means (30) for conditioning the flow of fluid are disposed at the same end (10a) of the measurement block as the inlet end (12a) of the measurement channel and said means for directing each fraction of the fluid flow towards the inlet end (12a) of the measurement channel direct said fractions at a mean convergence angle that is sufficiently open relative to the flow direction as it penetrates into the measurement channel (12).

2. A device according to claim 1, characterized in that the inlet chamber (32) has two opposite walls (32a, 32b), one of which (32a) is provided with the fluid inlet (18) and the other of which (32b) is situated facing said fluid inlet and extending perpendicularly to the flow direction of the fluid as it penetrates into said inlet chamber (32), and in that the fractioning means are formed by two openings (34, 36) provided in the wall that is opposite the fluid inlet, said openings being spaced apart transversely and communicating with the end (10a) of the measurement block (10) that corresponds to the inlet end (12a) of the measurement channel.

3. A device according to claim 2, characterized in that said corresponding end (10a) of the measurement block is formed by an upstream chamber (10a) containing one of the ultrasound transducers (14) and separated from the inlet chamber (32) by the wall (32b) of the inlet chamber that is opposite the fluid inlet (18).

4. A device according to any one of claims 1 to 3, characterized in that the mean convergence angle is not less than 45°.

5. A device according to any one of claims 2 to 4, characterized in that each opening (34, 36) is situated at a distance from the transverse plane containing the inlet end (12a) of the measurement channel (12) that is not less than the hydraulic diameter of said measurement channel.

6. A device according to any one of claims 2 to 5, characterized in that the two openings (34, 36) are spaced apart from each other by a minimum distance that is not less than half the hydraulic diameter of the measurement channel (12).

7. A device according to any one of claims 3 to 6, characterized in that the ultrasound transducer (14) of the upstream chamber (10a) is situated at a distance from the transverse plane containing the inlet end of the measurement channel (12) which is not less than the distance between said transverse plane and any of the openings.

8. A device according to any one of claims 2 to 7, characterized in that the sum of the flow sections of the openings (34, 36) is not less than the hydraulic section of the measurement channel.

9. A device according to claim 8, characterized in that the sum of the flow sections of the openings (34, 36) is preferably equal to not less than four times the hydraulic section of the measurement channel.

10. A device according to any one of claims 1 to 9, characterized in that the increase in section between the fluid inlet (18) and the inlet chamber (32) is not less than a factor of two.

11. A device according to claim 10, characterized in that the increase in section is not less than a factor of four.

12. A device according to any one of claims 2 to 11, characterized in that the openings (34, 36) are situated facing the fluid inlet (18).

13. A device according to any one of claims 2 to 11, characterized in that the openings (34, 36) are situated in a transverse plane that is different from the transverse plane of the fluid inlet (18).

14. A device according to any one of claims 2 to 13, characterized in that the conditioning means (30) further comprise an additional chamber (38) disposed opposite the inlet chamber (32) relative to the corresponding end (10a) of the measurement block, said additional chamber communicating with said end via windows (40, 42) situated facing respective ones of the openings (34, 36).

15. A device according to any one of claims 1 to 14, characterized in that said device (1) is symmetrical about a transverse plane passing through the middle of the measurement block (10).

16. A device according to any one of claims 1 to 15, characterized in that the transverse cross-section of the measurement channel (12) is circular in shape.

17. A device according to any one of claims 1 to 15, characterized in that the transverse cross-section of the measurement channel is rectangular in shape, with its long dimension being parallel to the plane of symmetry (P).

18. A device according to any one of claims 1 to 17, characterized in that the inlet end (12a) of the measurement channel (12) is converging in shape.
